Europäisches Patentamt

European Patent Office

Office européen des brevets

(19)

(11) **EP 0 658 290 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(21) Anmeldenummer: **93918930.4**

(22) Anmeldetag: **25.08.1993**

(51) Int Cl.$^6$: **H02H 7/26**

(86) Internationale Anmeldenummer:
**PCT/DE93/00791**

(87) Internationale Veröffentlichungsnummer:
**WO 94/06189 (17.03.1994 Gazette 1994/07)**

(54) **VERFAHREN ZUM GEWINNEN EINES AUSLÖSESIGNALS DURCH VERGLEICH VON STRÖMEN AN DEN ENDEN EINER ENERGIEÜBERTRAGUNGSSTRECKE**

PROCESS FOR OBTAINING TRIGGERING SIGNALS BY THE COMPARISON OF CURRENTS AT THE ENDS OF A POWER TRANSMISSION PATH

PROCEDE POUR L'OBTENTION D'UN SIGNAL DE DECLENCHEMENT PAR COMPARAISON DE COURANTS AUX EXTREMITES D'UN TRAJET DE TRANSPORT D'ENERGIE

(84) Benannte Vertragsstaaten:
**DE FR GB SE**

(30) Priorität: **07.09.1992 DE 4230059**

(43) Veröffentlichungstag der Anmeldung:
**21.06.1995 Patentblatt 1995/25**

(73) Patentinhaber: **SIEMENS AKTIENGESELLSCHAFT**
**80333 München (DE)**

(72) Erfinder: **RUDAT, Lothar**
**D-44339 Dortmund (DE)**

(56) Entgegenhaltungen:
- **ELEKTRIE, Bd. 45, Nr. 7 , 1991 , BERLIN, DD, Seiten 272 - 276; KOCH G.: 'Ein numerischer Stromvergleichsschutz mit digitaler Messwertübertragung über Lichtwellenleiter'**

EP 0 658 290 B1

**Beschreibung**

Die Erfindung bezieht sich auf ein Verfahren zum Gewinnen eines Auslösesignals durch Vergleich von Strömen an den Enden eines zu überwachenden Abschnittes einer elektrischen Energieübertragungsstrecke, bei dem an jedem Ende des zu überwachenden Abschnittes phasenselektiv

- aus den Strömen gewonnene Meßgrößen jeweils einer Analog-Digital-Wandlung unter Gewinnung digitaler Strommeßwerte unterworfen werden, aus denen anschließend durch digitale Sinus-Filterung gefilterte Strommeßwerte gewonnen werden,
- von dem jeweils aktuellen gefilterten Strommeßwert ein gespeicherter Strombezugsmeßwert unter Bildung jeweils einer Meßhilfsgröße subtrahiert wird,
- ein das Vorzeichen der jeweiligen Meßhilfsgröße kennzeichnendes Vorzeichen-Signal einerseits für eine Auswertung an dem jeweils einen Ende bereitgehalten und andererseits über eine Datenübertragungsstrecke zur Auswertung an dem jeweils anderen Ende des zu überwachenden Abschnittes übertragen wird und
- eine die jeweilige Auswertung freigebende Anregegröße erzeugt wird, wenn die Meßhilfsgröße betragsmäßig oberhalb eines vorgegebenen Schwellenwertes liegt.

Ein solches Verfahren ist bei dem Siemens-Stromvergleichsschutz 7 SD 51 offenkundig benutzt bzw. in seinen wesentlichen Verfahrensschritten in der Zeitschrift "Elektrie", 45(1991)7, Seiten 272 bis 276 beschrieben. Bei dem bekannten Stromvergleichsschutz handelt es sich um einen schnellen und selektiven Kurzschlußschutz für elektrische Energieübertragungsstrecken bildende Kabel oder Freileitungentungen. Bei diesem Stromvergleichsschutz werden durch die digitale Sinus-Filterung in den erfaßten Strömen enthaltene Gleichanteile unterdrückt und Oberwellen gedämpft. Zur Bildung der Meßhilfsgröße wird bei dem Stromvergleichsschutz als Strombezugsmeßwert auf einen gefilterten Strommeßwert zurückgegriffen, der zwei Perioden des jeweiligen Stromes auf der Übertragungsstrecke zuvor erfaßt worden ist, oder auf einen vorgegebenen Stromgrenzwert. Die Vorzeichen-Signale, die an beiden Enden des zu überwachenden Abschnittes der elektrischen Energieübertragungsstrecke aus den Meßhilfsgrößen gebildet werden, werden an jedem Ende miteinander verglichen, sofern die Meßhilfsgröße betragsmäßig oberhalb eines vorgegebenen Schwellenwertes liegt. In Abhangigkeit von den Vorzeichen der jeweils miteinander zu vergleichenden Vorzeichen-Signale wird im Rahmen der Auswertung ein Auslösezähler beaufschlagt; diese Beaufschlagung erfolgt durch Addition oder Subtraktion von verschieden großen Konstanten, abhängig davon, ob sich aus dem Vergleich eine Notwendigkeit zu einer schnellen Auslösung oder zu einer hohen Stabilisierung ergibt.

Der Erfindung liegt die Aufgabe zugrunde, das bekannte Verfahren so auszugestalten, daß es auch bei relativ schnellen Frequenzänderungen der Ströme auf dem zu überwachenden Abschnitt einer elektrischen Energieübertragungsstrecke mit großer Zuverlässigkeit arbeitet.

Zur Lösung dieser Aufgabe werden bei einem Verfahren der eingangs angegebenen Art erfindungsgemäß an jedem Ende des zu überwachenden Abschnittes

- die digitalen Strommeßwerte einer digitalen CosinusFilterung unter Gewinnung weiterer gefilterter Strommeßwerte unterzogen,
- eine BetragsmeßgrÖße aus den einen und den weiteren gefilterten Strommeßwerten durch Betragsbildung und Tiefpaßfilterung gebildet,
- von der jeweils aktuellen BetragsmeßgrÖße eine gespeicherte Betragsbezugsmeßgröße unter Bildung einer Betragsvergleichsgröße subtrahiert,
- die Betragsvergleichsgröße mit einem vorgegebenen Grenzwert verglichen und eine weitere Anregegröße erzeugt, wenn die Betragsvergleichsgröße betragsmäßig oberhalb des Grenzwertes liegt, und
- bei Vorliegen beider Anregegrößen die Auswertung der Vorzeichen-Signale und der entsprechenden Vorzeichen-Signale vom anderen Ende des zu überwachenden Abschnittes durchgeführt.

Ein wesentlicher Vorteil des erfindungsgemäßen Verfahrens liegt in seiner großen Frequenzunabhängigkeit. Darunter ist zu verstehen, daß auch bei verhältnismäßig schnellen Frequenzänderungen der Ströme auf dem zu überwachenden Abschnitt einer elektrischen Energieübertragungsstrecke die Auswertung der Vorzeichen-Signale aufgrund des gleichzeitigen Vorliegens beider Anregegrößen nur dann erfolgt, wenn tatsächlich Ströme in der Größenordnung von Kurzschlußströmen durch den zu überwachenden Abschnitt fließen. Dies ist darauf zurückzuführen, daß bei dem erfindungsgemaßen Verfahren außer einer Meßhilfsgröße eine Betragsmeßgröße gebildet wird, mittels der unter Benutzung einer gespeicherten Betragsbezugsmeßgröße eine Betragsvergleichsgröße gewonnen wird; die Betragsmeßgröße ist nämlich von Frequenzänderungen der Ströme auf dem zu überwachenden Abschnitt weitgehend unabhängig. Mittels der Betragsvergleichsgröße wird durch Vergleich mit einem vorgegebenen Grenzwert die weitere Anregegröße erzeugt. Diese weitere Anregegröße ist demzufolge von Frequenzänderungen der Ströme im zu über-

EP 0 658 290 B1

wachenden Abschnitt ebenfalls weitgehend unabhängig. Somit ist bei dem erfindungsgemäßen Verfahren sichergestellt, daß, wenn - neben der einen Anregegröße - die weitere Anregegröße vorliegt, eine Auswertung der Vorzeichen-Signale tatsächlich nur wegen fließender Kurzschlußströme durchgeführt wird.

Bei dem erfindungsgemäßen Verfahren können als Betragsbezugsmeßgröße unterschiedliche Betragsmeßgrößen verwendet werden. Als vorteilhaft wird es jedoch im Hinblick auf eine ausreichend zuverlässige Arbeitsweise angesehen, wenn eine zwei Perioden des jeweiligen Stromes zurückliegende Betragsmeßgröße verwendet wird, wenn diese Betragsmeßgröße kleiner als ein vorgegebener Betragsgrenzwert ist; als Betragsbezugsmeßgröße wird der vorgegebene Betragsgrenzwert benutzt, wenn die Betragsmeßgröße größer als der vorgegebene Betragsgrenzwert ist.

Zur weiteren Erhöhung der Zuverlässigkeit des erfindungsgemäßen Verfahrens wird die eine Anregegröße unterdrückt, wenn die Differenz zwischen einem aktuellen digitalen Strommeßwert und einem vorangehenden, gespeicherten digitalen Strommeßwert unter einem vorgegebenen Minimalwert liegt. Dadurch wird nämlich mit Sicherheit unterschieden, ob der zu überwachende Abschnitt der elektrischen Energieübertragungsstrecke als abgeschaltet zu betrachten ist oder nicht; durch Wahl des vorgegebenen Minimalwertes wird sichergestellt, daß auch Störeinflüsse das Ergebnis nicht beeinflussen können.

Zur Erläuterung der Erfindung ist in

Figur 1    ein Blockschaltbild einer Anordnung zur Durchführung des erfindungsgemäßen Verfahrens, in
Figur 2    der Frequenzgang der Sinus-Filterung, in
Figur 3    der Frequenzgang der Cosinus-Filterung, in
Figur 4    der Frequenzgang der Betrags-Bildung und in
Figur 5    ein Diagramm zur weiteren Veranschaulichung der Wirkungsweise des erfindungsgemäßen Verfahrens dargestellt.

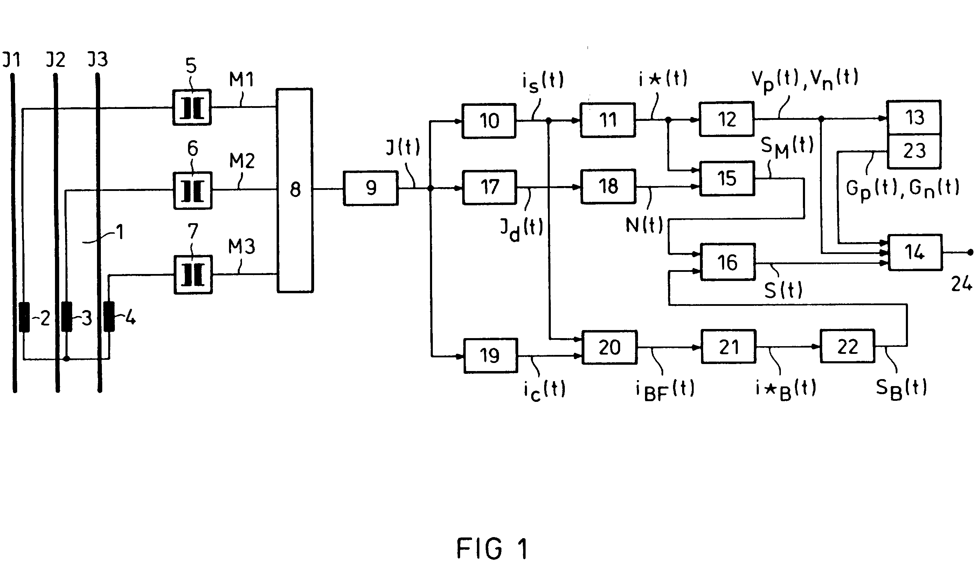

Wie Figur 1 zu entnehmen ist, werden Ströme J1, J2 und J3 eines zu überwachenden Abschnittes 1 einer im übrigen nicht weiter dargestellten elektrischen Energieübertragungsstrecke mittels Wandlern 2, 3 und 4 erfaßt. Über weitere Anpassungswandler 5, 6 und 7 werden aus den Strömen J1, J2 und J3 gewonnene Meßgrößen M1, M2 und M3 einem Multiplexer 8 zugeführt, dem ein Analog-Digital-Wandler 9 nachgeordnet ist. Am Ausgang dieses Wandlers 9 entstehen somit digitale Strommeßwerte J(t).

Diese digitalen Strommeßwerte J(t) werden in einem Sinus-Filter 10 einer Sinus-Filterung unterzogen, so daß am Ausgang dieses Sinus-Filters 10 gefilterte Strommeßwerte $i_s(t)$ entstehen. Die jeweiligen Werte $i_s(t)$ lassen sich durch folgende Gleichung (1) beschreiben:

$$i_s(t) = i_s(t-1) + i(t) - 2i(t-1/2T) + i(t-T) \tag{1}$$

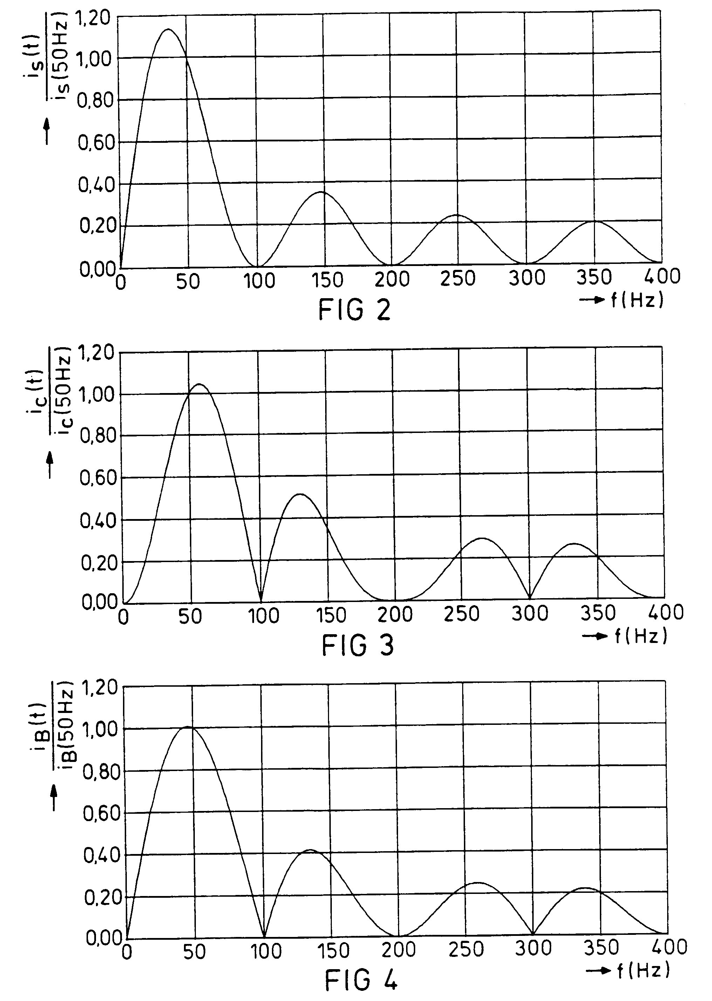

In dieser Gleichung gibt T die Periode der Ströme J1 bis J3 im zu überwachenden Abschnitt 1 an. Der Frequenzgang des Sinus-Filters 10 ist in Figur 2 dargestellt.

Die jeweils aktuellen gefilterten Strommeßwerte $i_s(t)$ werden in einem Modifizierer-Baustein 11 in der Weise weiter verarbeitet, daß von dem jeweils aktuellen gefilterten Strommeßwert ein gespeicherter Strombezugsmeßwert unter Bildung jeweils einer Meßhilfsgröße i*(t) entsteht.

Dabei ist die jeweilige Meßhilfsgröße i*(t) durch die folgende Beziehung (2) gegeben

$$i*(t) = i_s(t) - i_s(t-2T), \tag{2}$$

wenn die Beziehung (3) gilt:

$$-I_{grenz} < i_s(t-2T) < +I_{grenz}. \tag{3}$$

In dieser Gleichung (3) gibt die Größe $I_{grenz}$ einen vorgegebenen Grenzwert an.
Erfüllt der gespeicherte Strombezugsmeßwert die folgende Beziehung (4)

$$i_s(t-2T) > +I_{grenz}, \tag{4}$$

dann ist die Meßhilfsgröße i*(t) durch die folgende Beziehung (5) definiert

3

$$i^*(t) = i_s(t) - I_{grenz.} \qquad (5)$$

Wenn für den gespeicherten Strombezugsmeßwert die Gleichung (6) gilt

$$-I_{grenz} > i_s (t-2T), \qquad (6)$$

dann ist die Meßhilfsgröße durch die folgende Gleichung (7) definiert:

$$i^*(t) = i_s(t) + I_{grenz.} \qquad (7)$$

Die so gebildeten Meßhilfsgrößen werden in einem Vorzeichenbildner 12 auf ihr Vorzeichen hin untersucht, und es werden Vorzeichen-Signale $V_p(t)$ und $V_n(t)$ gebildet, die den Wert "1" aufweisen, wenn folgende aus den Gleichungen (8) und (9) ersichtliche Verhaltnisse vorliegen

$$V_p(t) = 1 \qquad \text{wenn } i^*(t) > + I_{Vorzeichen} \qquad (8)$$

$$V_n(t) = 1 \qquad \text{wenn } i^*(t) < - I_{Vorzeichen} \qquad (9)$$

Die Vorzeichen-Signale $V_p(t)$ und $V_n(t)$ werden einerseits einer Datenübertragungsstrecke 13 zugeführt und andererseits einem Auswertungsblock 14 zugeleitet.

Wie aus Figur 1 ferner hervorgeht, wird die Meßhilfsgröße $i^*(t)$ einer Schwellenwertanordnung 15 zugeführt, wo sie daraufhin untersucht wird, ob sie einen vorgegebenen Schwellenwert überschreitet. Es tritt am Ausgang der Schwellenwertanordnung 15 eine Anregegröße $S_M(t)$ auf, wenn folgende aus den nachfolgenden Gleichungen (10) und (11) definierte Verhältnisse vorliegen:

$$S_M(t) = 1 \qquad \text{wenn } i^*(t) > + I_{Schutzschwelle} \qquad (10)$$

$$S_M(t) = 1 \qquad \text{wenn } i^*(t) < - I_{Schutzschwelle} \qquad (11)$$

Die Anregegröße $S_M(t)$ wird einer weiteren Schwellenwertanordnung 16 zugeführt.

Der Figur 1 ist ferner zu entnehmen, daß dem Analog-Digital-Wandler 9 ein Tiefpaß-Filter 17 nachgeordnet ist, in dem nicht nur eine entsprechende Filterung des digitalen Stromwertes J(t) erfolgt, sondern auch eine Differenzbildung zwischen dem jeweils aktuellen digitalen Strommeßwert J(t) und einem vorangehenden, gespeicherten digitalen Strommeßwert. Es entsteht dadurch eine Ausgangsgröße $J_d$, die einem Erkennungsbaustein 18 zugeführt wird. In diesem Erkennungsbaustein 18 wird geprüft, ob die weitere Große $J_d$ unter einem vorgegebenen Minimalwert liegt. Wird dieser Minimalwert nicht unterschritten, dann wird ein Signal N(t) an die Schwellenwertanordnung 15 gegeben, wodurch die eine Anregegröße $S_M(t)$ an die weitere Schwellenwertanordnung 16 weitergegeben wird.

Die Figur 1 läßt ferner erkennen, daß die digitalen Strommeßwerte J(t) auch einem Cosinus-Filter 19 (der Frequenzgang ist in Figur 3 dargestellt) zugeführt werden, in dem nach der folgenden Beziehung (12) ein Strom $i_c(t)$ gebildet wird:

$$i_c(t) = i_c(t-1) + i(t) - 2i(t-1/4T) + 2i(t-3/4T) - i(t-T) \qquad (12)$$

Die gefilterten Strommeßwerte $i_c(t)$ werden einem Betragsbildner 20 zugeführt, der auch mit den sinus-gefilterten Strommeßwerten $i_s(t)$ beaufschlagt ist. In diesem Betragsbildner 20 erfolgt gemäß der nachstehenden Gleichung (13) eine Betragsbildung $i_B(t)$:

$$i_B(t) = \sqrt{i_s(t)^2 + i_c(t)^2} \qquad (13)$$

In dem Betragsbildner 20 erfolgt auch eine Tiefpaß-Filterung, so daß am Ausgang des Betragsbildners 20 - den Frequenzgang ohne Berücksichtigung der Tiefpaß-Filterung zeigt Figur 4 - eine Betragsmeßgröße $i_{BF}(t)$ auftritt, die sich durch die folgende Gleichung (14) beschreiben läßt:

$$i_{BF}(t) = \frac{i_B(t) + i_B(t - \frac{1}{4}T)}{2} \tag{14}$$

In einem nachgeordneten weiteren Baustein 21 wird unter Benutzung einer Betragsbezugsmeßgroße eine Betragsvergleichsgröße $i^*_B(t)$ gebildet, wenn die aus den nachfolgenden Gleichungen (15) und (16) entnehmbaren Verhältnisse gegeben sind:

$$i^*_B(t) = I_{BF}(t) - i_{BF}(t-2T), \text{ wenn } i_{BF}(t-2T) < + I_{Bgrenz} \tag{15}$$

$$i^*_B(t) = I_{BF}(t) - I_{Bgrenz}, \text{ wenn } i_{BF}(t-2T) > + I_{Bgrenz} \tag{16}$$

In diesen beiden Gleichungen (15) und (16) ist mit $I_{Bgrenz}$ ein vorgegebener Stromgrenzwert bezeichnet, während $i_{BF}(t-2T)$ eine Betragsbezugsmeßgröße bezeichnet, die zwei Perioden des Stromes vorher erfaßt worden ist. Die Gleichung (16) zeigt, daß als Betragsbezugsgröße auch der Stromgrenzwert $I_{Bgrenz}$ benutzt wird.

Mit einer nachgeordneten zusätzlichen Schwellenwertanordnung 22 wird untersucht, ob die Betragsvergleichsgröße $i^*_B(t)$ oberhalb eines Grenzwertes $J_{Bschwell}$ liegt. Ist dies der Fall, dann ist ein Ausgangssignal $S_B(t)$ dieser zusätzlichen Schwellenwertanordnung 22 "1", wodurch die Grenzwertüberschreitung signalisiert wird. Die weitere Schwellenwertanordnung 16 erhält dann dieses Ausgangssignal als eine weitere Anregegröße $S_B(t)$.

Liegen beide Anregegrößen $S_M(t)$ und $S_B(t)$ vor, dann wird der Auswertungsblock 14 zur Auswertung der Vorzeichen-Signale freigegeben, indem er mit einem Ausgangssignal $S(t)$ aus der weiteren Schwellenwertanordnung 16 beaufschlagt wird. Dazu sind von einer in ihrem Aufbau mit der Gesamtanordnung nach Figur 1 entsprechenden Einrichtung am (nicht dargestellten) anderen Ende des zu überwachenden Leitungsabschnittes 1 übertragene weitere Vorzeichen-Signale $G_p(t)$ und $G_n(t)$ erforderlich, die über eine weitere Datenübertragungsstrecke 23 empfangen worden sind.

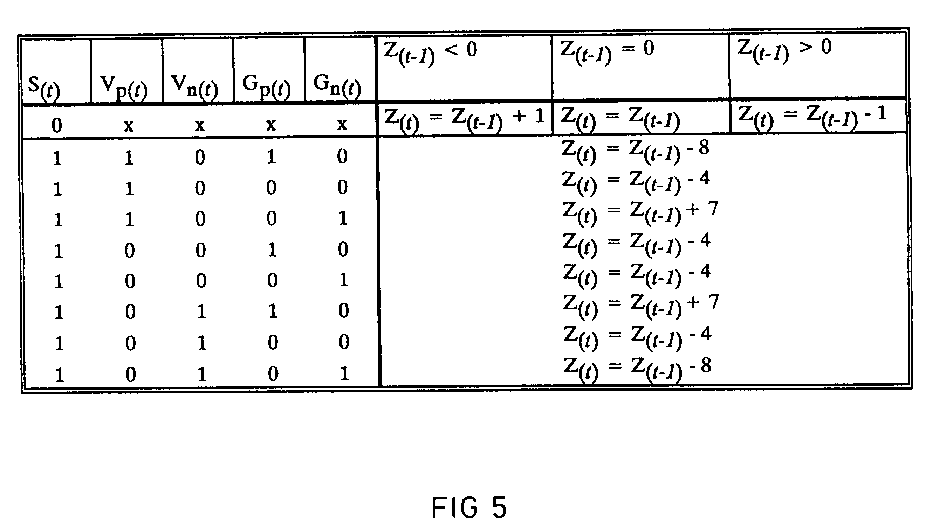

Der Auswertungsblock 14 enthält als wesentlichen Bestandteil einen elektronischen Zähler, dessen Zählerstand $Z(t)$ in Abhängigkeit von den Signalen $S(t)$, $V_p(t)$, $V_n(t)$, $G_p(t)$ und $G_n(t)$ so verändert wird, wie es die letzten drei Spalten der Figur 5 erkennen lassen. Dieser Figur ist im einzelnen zu entnehmen, daß unabhängig von den Vorzeichen-Signalen $V_p(t)$ bis $G_n(t)$ der Zähler um eins hochgezählt wird, wenn das Signal $S(t)$ "0" ist und der Zählerstand vorher kleiner als "0" war. War der Zählerstand $Z(t)$ bei diesen Verhältnissen größer als "0", dann wird der Zähler um den Wert "1" zurückgesetzt. Ist dagegen das Signal $S(t)$ "1", dann erfolgt eine Beaufschlagung des Zählers in einer Weise, wie es die vorletzte Spalte der Figur 5 zeigt. Dies bedeutet, daß bei positiven Vorzeichen von $V_p(t)$ und $G_p(t)$ der Zähler um den Wert "8" im Sinne einer hohen Auslösung zurückzahlend beaufschlagt wird. Ist $V_p(t)$ "1" und $G_p(t)$ "0", dann wird im Sinne einer niedrigen Auslösung nur um den Wert "4" zurückgezahlt. Andernfalls erfolgt durch ein Hochzählen um den Wert "7" eine hohe Stabilisierung, wenn $V_p(t)$ = "1" und $G_n(t)$ = "1" ist. Das weitere Verhalten des Zählers bei unterschiedlicher Vorzeichenkombination geht aus den weiteren Zeilen der Figur 5 ohne weiteres hervor. Im konkreten Falle ist die Einstellung so vorgenommen, daß bei einem Zählerstand $Z(t)$ = -13 eine Auslösung erfolgt, was durch Auftreten eines Signals am Ausgang 24 signalisiert wird. Durch dieses Signal kann über übliche Betätigungskontakte ein in der Figur nicht dargestellter Leistungsschalter betätigt werden.

Bei einer bevorzugten praktischen Ausführungsform zur Durchführung des erfindungsgemäßen Verfahrens sind die verschiedenen Bausteine 8 bis 22 der Anordnung nach Figur 1 durch eine Datenverarbeitungsanlage verwirklicht.

## Patentansprüche

1. Verfahren zum Gewinnen eines Auslösesignals durch Vergleich von Strömen (J1, J2, J3) an den Enden eines zu überwachenden Abschnittes (1) einer elektrischen Energieübertragungsstrecke, bei dem an jedem Ende des zu überwachenden Abschnittes (1) phasenselektiv

   - aus den Strömen (J1, J2, J3) gewonnene Meßgrößen (M1, M2, M3) jeweils einer Analog-Digital-Wandlung (9) unter Gewinnung digitaler Strommeßwerte (J(t)) unterworfen werden, aus denen anschließend durch digitale Sinusfilterung (10) gefilterte Strommeßwerte ($i_s$(t)) gewonnen werden,

- von dem jeweils aktuellen gefilterten Strommeßwert ($i_s$(t)) ein gespeicherter Strombezugsmeßwert (z. B. $i_s$(t - 2 T) unter Bildung jeweils einer Meßhilfsgröße (i*(t)) subtrahiert wird,
- ein das Vorzeichen der jeweiligen Meßhilfsgröße (i*(t)) kennzeichnendes Vorzeichen-Signal ($V_p$(t), $V_n$(t)) einerseits für eine Auswertung an dem jeweils einen Ende bereitgehalten und andererseits über eine Datenübertragungsstrecke (13) zur Auswertung an dem jeweils anderen Ende des zu überwachenden Abschnittes (1) übertragen wird, und
- eine die jeweilige Auswertung freigebende Anregegröße ($S_M$(t)) erzeugt wird, wenn die Meßhilfsgröße (i*(t)) betragsmäßig oberhalb eines vorgegebenen Schwellenwertes liegt,

**dadurch gekennzeichnet,** daß an jedem Ende des zu überwachenden Abschnittes

- die digitalen Strommeßwerte (J(t)) einer digitalen Cosinusfilterung (19) unter Gewinnung weiterer gefilterter Strommeßwerte ($i_c$(t)) unterzogen werden,
- eine Betragsmeßgröße ($i_{BF}$(t)) aus den einen und den weiteren gefilterten Strommeßwerten ($i_s$(t), $i_c$(t)) durch Betragsbildung und Tiefpaßfilterung gebildet wird,
- von der jeweils aktuellen Betragsmeßgröße ($i_{BF}$(t)) eine gespeicherte Betragsbezugsmeßgröße (z. B. $i_{BF}$(t - 2T)) unter Bildung einer Betragsvergleichgröße ($i*_B$(t)) subtrahiert wird,
- die Betragsvergleichsgröße ($i*_B$(t)) mit einem vorgegebenen Grenzwert ($J_{Bschwell}$) verglichen und eine weitere Anregegröße ($S_{B(t)}$) erzeugt wird, wenn die Betragsvergleichsgröße ($i*_B$(t)) betragsmäßig oberhalb des Grenzwertes ($J_{Bschwell}$) liegt, und
- bei Vorliegen beider Anregegrößen ($S_M$(t), $S_B$(t)) die Auswertung der Vorzeichen-Signale ($V_p$(t), $V_n$(t)) und der entsprechenden Vorzeichen-Signale ($G_p$(t), $G_n$(t)) vom anderen Ende des zu überwachenden Abschnittes (1) durchgeführt wird.

2. Verfahren nach Anspruch 1,
   **dadurch gekennzeichnet,** daß

   - als Betragsbezugsmeßgröße eine zwei Perioden des Stromes zurückliegende Betragsmeßgröße ($i_{BF}$(t - 2T)) verwendet wird, wenn diese Betragsmeßgröße ($i_{BF}$(t - 2 T)) kleiner als ein vorgegebener Betragsgrenzwert ($J_{Bgrenz}$) ist, und als Betragsbezugsmeßgröße der vorgegebene Betragsgrenzwert ($J_{Bgrenz}$) benutzt wird, wenn die Betragsmeßgröße ($i_{BF}$(t - 2 T)) größer als der vorgegebene Betragsgrenzwert ($J_{Bgrenz}$) ist.

3. Verfahren nach Anspruch 1 oder 2,
   **dadurch gekennzeichnet,** daß

   - die eine Anregegröße ($S_M$(t)) unterdrückt wird, wenn die Differenz (Jd) zwischen einem aktuellen digitalen Strommeßwert (J(t)) und einem vorangehenden, gespeicherten digitalen Strommeßwert unter einem vorgegebenen Minimalwert liegt.

**Claims**

1. Method for obtaining a tripping signal through the comparison of currents (J1, J2, J3) at the ends of a section (1) of an electrical power transmission path to be monitored, where at each end of the section (1) to be monitored, in a phase-selective manner

   - measured variables (M1, M2, M3) obtained from the currents (J1, J2, J3) are in each case subjected to an analog-to-digital conversion (9) while obtaining digital current measured values (J(t)), from which subsequently current measured values ($i_s$(t)) filtered by digital sine filtering (10) are obtained,
   - from the respectively present filtered current measured value ($i_s$(t)) a stored current reference measured value (for example $i_s$(t - 2 T) is subtracted with the formation of a respective auxiliary measured variable (i*(t)),
   - a sign signal ($V_p$(t), $V_n$(t)) characterizing the sign of the respective auxiliary measured variable (i*(t)) is on the one hand prepared for an evaluation at the respective one end and on the other hand is transmitted by way of a data transmission path (13) for evaluation at the respective other end of the section (1) to be monitored, and
   - a starting variable ($S_M$(t)) enabling the respective evaluation is generated if the auxiliary measured variable (i*(t)) lies in absolute-value-related manner above a given threshold value,

characterized in that at each end of the section to be monitored

- the digital current measured values (J(t)) are subjected to a digital cosine filtering (19) while obtaining additional filtered current measured values ($i_c$(t)),
- an absolute-value measured variable ($i_{BF}$(t)) is formed from the one and the additional filtered current measured values ($i_s$(t), $i_c$(t)) through absolute-value formation and low-pass filtering,
- from the respectively present absolute-value measured variable ($i_{BF}$(t)) a stored absolute-value reference measured variable (for example $i_{BF}$(t-2T)) is subtracted with the formation of an absolute-value comparison variable ($i^*_B$(t)),
- the absolute-value comparison variable ($i^*_B$(t)) is compared with a given limiting value ($J_{Bthreshold}$) and an additional starting variable ($S_B$(t)) is generated if the absolute-value comparison variable ($i^*_B$(t)) lies in absolute-value-related manner above the limiting value ($J_{Bthreshold}$), and
- with the presence of both starting variables ($S_M$(t), $S_B$(t)) the evaluation of the sign signals ($V_p$(t), $V_n$(t)) and the corresponding sign signals ($G_p$(t), $G_n$(t)) from the other end of the section (1) to be monitored is carried out.

2. Method according to claim 1, characterized in that an absolute-value measured variable ($i_{BF}$(t - 2T)) lying behind by two periods of the current is used as absolute-value reference measured variable if this absolute-value measured variable ($i_{BF}$(t - 2 T)) is smaller than a given absolute-value limiting value ($J_{Blimit}$), and the given absolute-value limiting value ($J_{Blimit}$) is used as absolute-value reference measured variable if the absolute-value measured variable ($i_{BF}$(t - 2 T)) is larger than the given absolute-value limiting value ($J_{Blimit}$).

3. Method according to claim 1 or 2, characterized in that the one starting variable ($S_M$(t)) is suppressed if the difference (Jd) between a present digital current measured value (J(t)) and a preceding stored digital current measured value lies below a given minimum value.

**Revendications**

1. Procédé pour l'obtention d'un signal de déclenchement par comparaison de courants (J1, J2, J3) aux extrémités d'une section à contrôler (1) d'une voie de transmission d'énergie électrique, selon lequel, à chaque extrémité de la section à contrôler (1), de manière sélective par rapport à la phase,

- on soumet des grandeurs mesurées (M1, M2, M3) obtenues à partir des courants (J1, J2, J3) à une conversion analogique-numérique (9) de manière à obtenir des valeurs mesurées numériques de courant (J(t)) à partir desquelles on obtient ensuite par un filtrage numérique en sinus (10) des valeurs mesurées filtrées de courant ($i_s$(t)),
- on soustrait de chaque valeur mesurée filtrée actuelle de courant ($i_s$(t)) une valeur mesurée mémorisée de référence de courant (par exemple $i_s$(t-2T)) de manière à former une grandeur auxiliaire mesurée ($i^*$(t)),
- on tient prêt un signal de signe ($V_p$(t), $V_n$(t)) caractérisant le signe de la grandeur auxiliaire mesurée respective ($i^*$(t)) d'une part, pour une évaluation, à une des extrémités et on le transmet d'autre part, pour une évaluation, par l'intermédiaire d'une voie de transmission de données (13) à l'autre extrémité de la section à contrôler (1) et
- on produit une grandeur d'excitation ($S_M$(t)) autorisant l'évaluation respective lorsque la valeur absolue de la grandeur auxiliaire mesurée ($i^*$(t)) est supérieure à un seuil prescrit,

caractérisé par le fait que, à chaque extrémité de la section à contrôler,

- on soumet les valeurs mesurées numériques de courant (J(t)) à un filtrage numérique en cosinus (19) de manière à obtenir d'autres valeurs mesurées filtrées de courant ($i_c$(t)),
- on forme une grandeur mesurée en valeur absolue ($i_{BF}$(t)) à partir de l'une et de l'autre valeur mesurée filtrée de courant ($i_s$(t), $i_c$(t)) par une formation de la valeur absolue et par un filtrage passe-bas,
- on soustrait de la grandeur mesurée actuelle en valeur absolue ($i_{BF}$(t)) une grandeur mesurée mémorisée de référence en valeur absolue (par exemple $i_{BF}$(t-2T)) de manière à former une grandeur de comparaison en valeur absolue ($i^*_B$(t)),
- on compare la grandeur de comparaison en valeur absolue ($i^*_B$(t)) à une valeur limite prédéterminée ($J_{BSeuil}$) et on produit une autre grandeur d'excitation ($S_B$(t)) lorsque la valeur absolue de la grandeur de comparaison en valeur absolue ($i^*_B$(t)) est supérieure à la valeur limite ($J_{BSeuil}$), et
- lorsque les deux grandeurs d'excitation ($S_M$(t), $S_B$(t)) sont présentes, on effectue l'évaluation des signaux de signes ($V_p$(t), $V_n$(t)) et des signaux de signes correspondants ($G_p$(t), $G_n$(t)) de l'autre extrémité de la section à contrôler (1).

2. Procédé selon la revendication 1,
   caractérisé par le fait que

   - l'on utilise comme grandeur mesurée de référence en valeur absolue une grandeur mesurée en valeur absolue ($i_{BF}$(t-2T)) précédant de deux périodes du courant lorsque cette grandeur mesurée en valeur absolue ($i_{BF}$(t-2T)) est inférieure à une valeur limite prédéterminée en valeur absolue ($J_{BSeuil}$) et l'on utilise comme grandeur mesurée de référence en valeur absolue la valeur limite prédéterminée en valeur absolue ($J_{BSeuil}$) lorsque la grandeur mesurée en valeur absolue ($i_{BF}$(t-2T)) est supérieure à la valeur limite prédéterminée en valeur absolue ($J_{BSeuil}$).

3. Procédé selon la revendication 1 ou 2,
   caractérisé par le fait que

   - l'on supprime la grandeur d'excitation ($S_M$(t)) lorsque la différence ($J_d$) entre une valeur mesurée numérique actuelle de courant (J(t)) et une valeur mesurée numérique mémorisée précédente de courant est inférieure à une valeur minimale prédéterminée.

FIG 1

FIG 2

FIG 3

FIG 4

| $S_{(t)}$ | $V_{p(t)}$ | $V_{n(t)}$ | $G_{p(t)}$ | $G_{n(t)}$ | $Z_{(t-1)} < 0$ | $Z_{(t-1)} = 0$ | $Z_{(t-1)} > 0$ |
|---|---|---|---|---|---|---|---|
| 0 | x | x | x | x | $Z_{(t)} = Z_{(t-1)} + 1$ | $Z_{(t)} = Z_{(t-1)}$ | $Z_{(t)} = Z_{(t-1)} - 1$ |
| 1 | 1 | 0 | 1 | 0 | | $Z_{(t)} = Z_{(t-1)} - 8$ | |
| 1 | 1 | 0 | 0 | 0 | | $Z_{(t)} = Z_{(t-1)} - 4$ | |
| 1 | 1 | 0 | 0 | 1 | | $Z_{(t)} = Z_{(t-1)} + 7$ | |
| 1 | 0 | 0 | 1 | 0 | | $Z_{(t)} = Z_{(t-1)} - 4$ | |
| 1 | 0 | 0 | 0 | 1 | | $Z_{(t)} = Z_{(t-1)} - 4$ | |
| 1 | 0 | 1 | 1 | 0 | | $Z_{(t)} = Z_{(t-1)} + 7$ | |
| 1 | 0 | 1 | 0 | 0 | | $Z_{(t)} = Z_{(t-1)} - 4$ | |
| 1 | 0 | 1 | 0 | 1 | | $Z_{(t)} = Z_{(t-1)} - 8$ | |

FIG 5